# EUROPÄISCHE PATENTSCHRIFT

(11) **EP 2 314 899 B1**
(45) Veröffentlichungstag und Bekanntmachung des Hinweises auf die Patenterteilung: **04.01.2012**
(21) Anmeldenummer: 09013295.2
(22) Anmeldetag: 21.10.2009
(51) Int. Cl.: F16J 15/32

(54) **Dichteinrichtung mit einer hohen Kälteflexibilität zur Abdichtung eines Kolbens**
Seal device with a high cold flexibility for sealing a piston
Dispositif d'étanchéité doté d'une flexibilité à froid élevée pour l'étanchéité d'un piston

(43) Veröffentlichungstag der Anmeldung: 27.04.2011
(73) Patentinhaber: Carl Freudenberg KG, 69469 Weinheim (DE)
(72) Erfinder: Vöhringer, Marc, 79774 Albbruck (DE); Masuch, Christoph, 79733 Görwihl (DE); Gerland, Armin, 79685 Häg-Ehrsberg (DE)

(56) Entgegenhaltungen:
- EP-A1- 1 767 837
- EP-A1- 1 959 172
- EP-A2- 1 431 633
- WO-A2-02/084153
- US-A- 3 851 888
- US-A- 4 687 212
- US-A- 4 991 858
- US-A- 5 979 904
- US-A1- 2003 230 855
- US-A1- 2006 066 058

## Beschreibung

### Technisches Gebiet

Die vorliegende Erfindung befasst sich mit einer Dichteinrichtung mit einer hohen Kälteflexibilität, zur Abdichtung eines Kolbens mit einem Dichtelement mit einem radialen statischen Dichtteil und einem radialen dynamischen Dichtteil, sowie einen Druckeinsatz, der sowohl am statischen Dichtteil des Dichtelements anliegt, wobei das Dichtelement und der Druckeinsatz aus unterschiedlichen Materialien bestehen und die Dichtteile jeweils mindestens eine Dichtlippe haben.

Dichtungen dieser Art sind an sich bekannt und haben einen vielfältigen Anwendungsbereich. Unter anderem werden sie auch für Kolbenpumpen eingesetzt. Bei Kolbenpumpen, die in der Hydraulik oder in Bremsanlagen von Fahrzeugen verwendet werden, muss die Dichtung hohen Ansprüchen genügen. Sie muss beständig gegenüber der zu fördemden Flüssigkeit sein, einen großen Temperaturbereich abdecken und auch eine hohe Laufzeit bei hohen Frequenzen aufweisen. Durch die Dichtung soll ein Austreten des Mediums bei Überdruck nach außen und ein Eintreten von Luft bei Unterdruck verhindert werden. Der Temperaturbereich umfasst beispielsweise sehr tiefe Temperaturen bei einem Kaltstart im Winter und auch sehr hohe Temperaturen im Sommer. In beiden Fällen soll die Flexibilität der Dichtung vorhanden sein. Gleichzeitig soll auch der Verschleiß des Dichtelements bei Laufzeiten von über 1000 Stunden und einer Frequenz von bis zu 63 Hz und bei einem Kolbenhub vom 1 - 3 mm möglichst gering sein.

Bei Kolbenpumpen, die über einen Exzenter angetrieben werden, weist der Kolben ein radiales Spiel auf. Durch die geforderten längeren Laufzeiten steigt der Verschleiß der radialen Kolbenführungen an und somit auch das radiale Spiel des Kolbens. Um auch bei einem großen radialen Spiel Überdruck und Unterdruck gut abzudichten, wird eine besonders hohe Flexibilität der Dichtung verlangt.

Der Kolben erfährt durch den Exzenter eine Pendelbewegung in radialer Richtung. Hier gilt es, mit der Dichtung das Medium (bei Überdruck) und die Luft (bei Unterdruck) abzudichten. Die Herausforderung liegt dadurch bei der Abdichtung (Überdruck und Unterdruck, insbesondere Unterdruck bei tiefen Temperaturen) eines hohen radiales Spiels.

### Stand der Technik

In der DE 10 2006 035 055 A1 ist eine Kolbenpumpe beschrieben, die für die Hydraulik oder in Bremsanlagen von Fahrzeugen Verwendung findet. Diese Kolbenpumpe ist mit einer Dichteinrichtung versehen, die zwei Dichtbereiche hat. Das verwendete Dichtelement hat einen statischen Dichtbereich, mit dem es am Gehäuse anliegt, und einen dynamischen Dichtbereich, der an die Kolbenoberfläche angedrückt wird. Der dynamische Dichtbereich ist mit einem Vorspannelement versehen, über den die Dichtlippe des dynamischen Dichtbereichs an die Kolbenoberfläche angedrückt wird. Für das Vorspannelement werden verschiedene Ausführungen vorgeschlagen. Genannt werden ein aus Metall bestehender Sprengring, eine Ringfeder und auch ein aus einem Elastomer bestehender O-Ring. Von Nachteil kann bei der gezeigten Ausführungsform sein, dass sowohl das Dichtelement als auch die Vorspannelemente auf der Druckseite mit der zu fördernden Flüssigkeit direkt in Berührung kommen. Dies gilt zum Teil auch für elastomere O-Ringe. Darüber hinaus ist die Übertragung der radialen Kraft auf den Kolbenumfang bei Einsatz eines Sprengrings nicht homogen. Dadurch kann ein nicht gleichmäßiger Abrieb des Dichtelements resultieren, was zu einer frühzeitigen Undichtigkeit führen kann. Auch ist zu beachten, dass bei den bei Fahrzeugen eingesetzten hydraulischen Standardkolbenpumpen der Durchmesser des Kolbens sehr gering sein kann und beispielsweise bei bestimmten Kolbenpumpen nur einen Durchmesser von 5 bis 6 mm besitzt. Die Herstellung einer so filigranen Ringfeder ist äußerst schwierig.

Durch die EP 1 959 172 A1 ist eine Dichteinrichtung bekannt geworden, die bei Kolbenpumpen mit hohen Drücken verwendet werden soll. Der Druckeinsatz ist in eine konkave Ausnehmung eingesetzt, die zum Druckmedium hin ausgerichtet ist. Dieses hat Nachteile wenn Unterdruck auftritt. Außerdem ist die Dichteinrichtung aufwendig in ihrer Konstruktion als auch montagemäßig.

Eine andere Ausbildung einer Dichteinrichtung zeigt die US 2006/0066058A1. Sie besteht aus einem L-förmigen Dichtelement, das von einem flexiblen elastomeren Element an die Dichtfläche angedrückt wird, dabei liegt das Element mit seiner radial äußeren Fläche an der Innenwand einer Aufnahmenut an. Der Fuß des Elements weist mit seiner Spitze zur Druckseite.

Als Stand der Technik ist des Weiteren in Kolbenpumpen der Einsatz von Dichtelementen mit einem X-förmigen Querschnitt aus EPDM zu nennen. EPDM weist den Nachteil auf, dass es keine ausreichende Kälteflexibilität aufweist. Dadurch kann bei dem Anliegen eines Mediumunterdrucks Luft in die Kolbenpumpe und somit in das Bremssystem eingetragen werden. Des Weiteren besteht die Möglichkeit, dass die Dichtelemente in dem Bauraum walken. Das Walken wird durch die vorliegenden Reibverhättnisse verursacht. Das Dichtelement wird auf der dynamischen Dichtesite von dem Kolben axial hin- und her bewegt, während es auf der statischen Dichtseite keine oder nur eine geringe axiale Verschiebung erfährt.

### Darstellung der Erfindung

Der Erfindung liegt die Aufgabe zugrunde, eine Dichteinrichtung zu schaffen, welche die voranstehend genannten Nachteile der bisher bekannten Ausführungen vermeidet. Die Dichteinrichtung soll konstruktiv einen einfachen Aufbau haben, leicht herstellbar und montierbar sein und bei allen in Frage kommenden Medien eingesetzt werden können. Sie soll des Weiteren einen hohen Temperaturbereich überstreichen und eine lange Laufzeit besitzen. Insbesondere soll das Dichtelement bei niedrigen Temperaturen, bei einem radialen Spiel und bei dem Anliegen eines Unterdrucks auf der Mediumseite ein Ansaugen von Luft vermeiden.

Das Medium kann einen Überdruck von über 100 bar aufweisen, wenn beispielsweise ein Bremspedal stark gedrückt wird oder ein Unterdruck (Vakuum) vorliegt, wenn beispielsweise das ESP-System eingreift, ohne dass der Fahrer das Bremspedal drückt. Bei der Belastung Überdruck muss die Dichtung das Medium abdichten und bei einem Unterdruck muss die Dichtung gegen Luft abdichten. Es darf keine Luft aus dem Exzenterraum in den Kolbenvorraum gelangen. Wenn Luft in das Bremssystem eintritt, wird ggf. die Bremswirkung bzw. die Wirkung des ESP stark eingeschränkt. Die Dichtung besitzt somit zwei Dichtaufgaben, die sich durch die Funktionsweise der Kolbenpumpe und durch die Anwendung in einem ABS/ESP-System ergeben.

Die Lösung der gestellten Aufgabe wird mit den Merkmalen des Anspruchs 1 erreicht. Die an den Anspruch 1 anschließenden Unteransprüche 2 und 3 geben vorteilhafte Weiterbildungen des Erfindungsgedankens wieder.

Bei der erfindungsgemäßen Dichteinrichtung wird ein Druckeinsatz auf der dem abzudichtenden Raum abgewandten Seite des Dichtelements angeordnet. Dabei wird der Druckeinsatz mit dem Dichtelement so verbunden, dass der Druckeinsatz sowohl an dem statischen Dichtteil als auch an dem dynamischen Dichtteil des Dichtelements anliegt. Durch die gewählte Anordnung von Dichtelement und Druckeinsatz wird sichergestellt, dass nur das Dichtelement mit der zu fördemden Flüssigkeit in Verbindung kommt. Der Druckeinsatz seinerseits liegt außerhalb dieses Flüssigkeitsbereichs und kann aus einem anderen Material als das Dichtelement bestehen. Dadurch besteht die Möglichkeit, dass der Werkstoff des Druckeinsatzes eine nicht so hohe Medienbeständigkeit aufweisen muss. Dabei ist es günstig, wenn der Druckeinsatz aus einem flexiblen Werkstoff hergestellt wird. Bevorzugt wird hier ein kälteflexibles Material, beispielsweise Silikon, eingesetzt. Für das Dichtelement seinerseits ist es günstig, wenn ein Ethylen-Propylen-DienKautschuk (EPDM) verwendet wird. Dichtelement und Druckeinsatz werden gesondert hergestellt und anschließend formschlüssig oder auch stoffschlüssig miteinander verbunden.

Die Dichtteile des Dichtelements haben jeweils mindestens eine Dichtlippe. Die bevorzugte Ausführungsform sieht jedoch vor, dass die Dichtteile jeweils zwei Dichtlippen haben. Möglich ist auch eine Ausführungsform, bei der im statischen Dichtteil eine der Dichtlippen durch eine Ringwulst des Druckteils selbst gebildet wird.

Schließlich sind Ausführungsformen möglich, bei denen das Dichtelement zusätzlich mit einer axialen Andrücklippe zur Medienseite versehen ist. Die axiale Andrücklippe kann zwei Aufgaben übemehmen. Erstens die Flächenpressung in axialer Richtung auf das der dynamischen Dichtseite zugewandten Schenkelende erhöht und zweitens kann die Walkbewegung des Dichtelements eingeschränkt werden. Eine Einschränkung des Walkverhaltens führt neben der Verminderung des Abriebs zu einer besseren Abdichtung des Druckeinsatzes gegen das Medium. Die axiale Andrücklippe kann neben einer rotationssymmetrischen Form auch durch Stege, axiale Aussparungen oder Noppen ausgeführt werden. Dadurch kann der anliegende Druck auf der gesamten axialen Stirnfläche wirken.

Die Basisausführung des Erfindungsgedankens besteht darin, dass das Dichtelement im Querschnitt gesehen in etwa L-förmig ausgebildet ist und der Druckeinsatz in die L-Form des Dichtelements eingesetzt, an seiner, dem abzudichtenden Medium abgewandten Seite, eine Ringwulst hat, welcher eine Dichtlippe für die radiale und/oder axiale Abdichtung bildet.

Die Verbindung des Druckeinsatzes mit dem Dichtelement wird hier stoffschlüssig vorgenommen, indem der Druckeinsatz und das Dichtelement miteinander verklebt oder durch eine Vulkanisation miteinander verbunden werden.

Bei allen Ausführungsformen werden das Dichtelement und der Druckeinsatz gesondert hergestellt. Danach werden beide miteinander verbunden und in die am Gehäuse vorhandene ringförmig ausgebildete Aufnahme eingepresst. Dadurch entsteht eine sichere statische Abdichtung an der radialen Außenwand der Aufnahme. Der im Gehäuse eingesetzte Kolben liegt mit seiner Außenfläche an dem dynamischen Dichtteil des Dichtelements an. Die Erfindung kann sowohl auf innen- (statischer Dichtbereich außen und dynamischer Dichtbereich innen) als auch außendichtende Dichtelemente (statischer Dichtbereich und dynamischer Dichtbereich außen) angewendet werden.

### Kurzbeschreibung der Zeichnung

Anhand zweier in der Zeichnung dargestellten Ausführungsbeispiele wird die Erfindung nachstehend näher erläutert. Vereinfacht wird die Dichteinrichtung in einer Nut dargestellt.

Es zeigt:
- Fig. 1:: eine Dichteinrichtung, bei der das Dichtelement L-förmig ausgebildet ist und ein etwa quadratischer Druckeinsatz darin eingesetzt ist, das eine eigene Ringwulst auf der dem abzudichtenden Medium abgewandten Seite im Bereich des statischen Dichtbereichs hat und
- Fig. 2:: eine Dichteinrichtung vergleichbar mit Fig. 1 mit der Abweichung, dass eine vorgezogene Dichtlippe sowohl am Kolben als auch am Grund der Aufnahme zur Anlage kommt.

### Ausführung der Erfindung

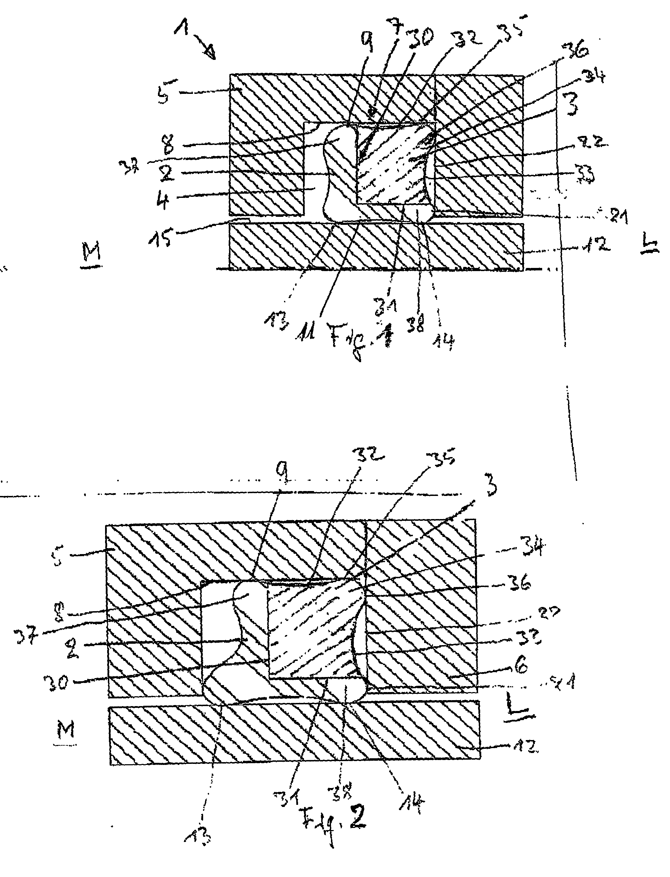

Die in der Fig. 1 gezeigte Dichteinrichtung 1 besteht aus dem Dichtelement 2 und dem Druckeinsatz 3. Das Dichtelement 2 und der Druckeinsatz 3 sind miteinander formschlüssig verbunden und in die Aufnahme 4 im Gehäuse 5 mit Presssitz eingefügt. Durch die Verpressung des Dichtelements wird die Haltekraft der formschlüssigen Verbindung erhöht. Die in die Aufnahme 4 eingepresste Dichteinrichtung 1 liegt mit ihrem statischen Dichtteil 7 mit Presssitz an der radialen Wand 8 der Aufnahme 4 an. Der statische Dichtteil 7 hat zwei Dichtlippen 9 und 35. Der dynamische Dichtteil 11 hat ebenfalls zwei Dichtlippen 13 und 14. Beide Dichtlippen 13 und 14 liegen an der Kolbenfläche 15 des Kolbens 12 an. Das Dichtelement 2 ist aus einem medium- und abriebbeständigen Material hergestellt. Vorzugsweise wird hier ein Ethylen-Propylen-Dien-Kautschuk (EPDM) verwendet. Der Druckeinsatz 3 wird aus einem Material hergestellt, das eine besonders hohe Flexibilität auch bei tiefen Temperaturen bewahrt. Hier kann ein Silikon als Material verwendet werden. Das Dichtelement 2 ist im Querschnitt gesehen L-förmig ausgebildet und hat noch eine weitere statisch Dichtlippe 21, die an die nicht mediendruckbelastete Stirnfläche 22 des Gehäuses 5 anliegt. Die Dichteinrichtung 1 ergibt eine gute Abdichtung gegenüber dem Medium M auf der linken Seite der Figur und dem Außenbereich L auf der rechten Seite der Figur. Die durch das Dichtelement 1 erreichte Abdichtung verhindert, dass der Druckeinsatz 3 ungewollt direkt mit dem Medium M in Berührung kommt. Eine geringe Leckage des Mediums kann nicht ausgeschlossen werden.

Die Fig.2 stellt eine Ausführungsform dar, bei der das Dichtelement 2 im Querschnitt gesehen ebenfalls eine etwa L-förmige Gestalt hat. Dabei wird die dynamische Dichtung durch die Dichtlippen 13 und 14 gebildet, während die statische Dichtung an der Fläche 8 durch die Dichtlippen 9 und 35 hergestellt wird. Der Druckeinsatz 3 hat im Querschnitt gesehen eine etwa rechteckige Form und ist mit seinen Seitenflächen und mit den entsprechenden Innenflächen 30 und 31 des L-förmigen Dichtelements 2 verklebt. Die Flächen 30 und 31 sind bevorzugt eben ausgestaltet und radial bzw. axial ausgerichtet. Die diesen Flächen 30 und 31 gegenüberliegenden Flächen 32 und 33 des Druckeinsatzes 3 sind konkav ausgebildet. Auf ihrer dem Medium M abgewandten Seite hat der Druckeinsatz 3 eine Ringwulst 34, die mit ihrer radialen äußeren Dichtlippe 35 an der Wandfläche 8 des Gehäuses 5 anliegt und mit Ihrer axialen Dichtrippe 36 an der druckabgewandten Nutstimfläche 22 zur Anlage kommt. Die konkave Ausbildung der Flächen 32 und 33 wird an den Endwülsten 37 und 38 der Enden des Ls des Dichtelements 2 fortgesetzt. Auf diese Weise wird die Beweglichkeit der statischen Dichtlippen 9 und 21 des Dichtelements 2 durch den Druckeinsatz 3 nicht eingeschränkt, gleichzeitig aber wird durch den Druckeinsatz 3 bei der Dichtlippe 9 in radialer Richtung und bei der Dichtlippe 21 in axialer Richtung ein Druck ausgeübt.

## Patentansprüche

1. Dichteinrichtung (1) mit einer hohen Kälteflexibilität zur Abdichtung eines Kolbens (12) mit einem statischen Dichtbereich und einem dynamischen Dichtbereich, mit einem Dichtelement (2) mit einem radialen statischen Dichtteil (7) und einem radialen dynamischen Dichtteil (11),sowie einem Druckeinsatz (3), der sowohl am statischen Dichtteil (7) als auch am dynamischen Dichtteil (11) des Dichtelements (2) anliegt, wobei das Dichtelement (2) und der Druckeinsatz (3) aus unterschiedlichen Materialien bestehen und die Dichtteile (7, 11) jeweils mindestens eine Dichtlippe (9, 13, 14) haben, **dadurch gekennzeichnet, dass** das Dichtelement (2) im Querschnitt L-förmig ausgebildet ist und der in die L-Form des Dichtelements (2) auf der dem abzudichtenden Raum (M) abgewandten Seite des Dichtelements (2) eingesetzte Druckeinsatz (3) im Querschnitt gesehen eine etwa rechteckige Form hat und mit seinen Seitenflächen mit den entsprechenden Innenflächen (30, 31) des L förmigen Dichtelements (2) verklebt ist, wobei der statische Dichtbereich zwei Dichtlippen (9, 35) hat, von denen die eine Dichtrippe (35) durch den Ringwulst (34) des Druckeinsatzes (3) gebildet ist.

2. Dichteinrichtung nach Anspruch 1, **dadurch gekennzeichnet, dass** der Ringwulst (34) eine weitere Dichtlippe (36) für die axiale Abdichtung bildet, die an der Druck-abgewandten Nutstimfläche (22) der Dichteinrichtung (1) anliegt.

3. Dichteinrichtung nach einem der Ansprüche 1 oder 2, **dadurch gekennzeichnet, dass** der Druckeinsatz (3) mit dem Dichtelement stoffschlüssig verbunden ist.

## Claims

1. Sealing device (1) with a high low-temperature flexibility for sealing a piston (12), having a static sealing region and a dynamic sealing region, comprising a sealing element (2) with a radial static sealing part (7) and a radial dynamic sealing part (11), and also a pressure insert (3) which bears both against the static sealing part (7) and against the dynamic sealing part (11) of the sealing element (2), wherein the sealing element (2) and the pressure insert (3) are made of different materials and the sealing parts (7, 11) each have at least one sealing lip (9, 13, 14), **characterized in that** the sealing element (2) is L-shaped in cross section and the pressure insert (3), which is inserted into the L shape of the sealing element (2) on that side of the sealing element (2) facing away from the space (M) to be sealed, has an approximately rectangular shape as seen in cross section and is adhesively bonded by its lateral faces to the corresponding inner faces (30, 31) of the L-shaped sealing element (2), wherein the static sealing region has two sealing lips (9, 35), one sealing lip (35) of which is formed by the annular bead (34) of the pressure insert (3).

2. Sealing device according to Claim 1, **characterized in that** the annular bead (34) forms a further sealing lip (36) for axial sealing, which lip bears against the pressure-remote groove end face (22) of the sealing device (1).

3. Sealing device according to either of Claims 1 and 2, **characterized in that** the pressure insert (3) is connected to the sealing element in an integrally bonded manner.

## Revendications

1. Dispositif d'étanchéité (1) comprenant une haute flexibilité à froid pour l'étanchéité d'un piston (12) comprenant une zone d'étanchéité statique et une zone d'étanchéité dynamique, comprenant un élément d'étanchéité (2) avec une partie d'étanchéité radiale statique (7) et une partie d'étanchéité radiale dynamique (11), ainsi qu'un insert de pression (3) qui s'applique à la fois contre la partie d'étanchéité statique (7) et contre la partie d'étanchéité dynamique (11) de l'élément d'étanchéité (2), l'élément d'étanchéité (2) et l'insert de pression (3) se composant de différents matériaux et les parties d'étanchéité (7, 11) ayant à chaque fois au moins une lèvre d'étanchéité (9, 13, 14), **caractérisé en ce que** l'élément d'étanchéité (2) est réalisé en forme de L en section transversale, et l'insert de pression (3) inséré dans la forme en L de l'élément d'étanchéité (2) du côté de l'élément d'étanchéité (2) opposé à l'espace à étancher (M), vu en coupe transversale, a une forme approximativement rectangulaire et est collé avec ses faces latérales aux faces internes correspondantes (30, 31) de l'élément d'étanchéité (2) en forme de L, la zone d'étanchéité statique ayant deux lèvres d'étanchéité (9, 35) dont l'une (35) est formée par le bourrelet annulaire (34) de l'insert de pression (3).

2. Dispositif d'étanchéité selon la revendication 1, **caractérisé en ce que** le bourrelet annulaire (34) forme une lèvre d'étanchéité supplémentaire (36) pour l'étanchéité axiale, laquelle s'applique contre la surface frontale de rainure (22) du dispositif d'étanchéité (1) opposée à la pression.

3. Dispositif d'étanchéité selon l'une quelconque des revendications 1 ou 2, **caractérisé en ce que** l'insert de pression (3) est connecté par engagement par liaison de matière à l'élément d'étanchéité.
